# EUROPÄISCHE PATENTSCHRIFT

(11) **EP 0 943 856 B1**
(45) Veröffentlichungstag und Bekanntmachung des Hinweises auf die Patenterteilung: **23.04.2003**
(21) Anmeldenummer: 99101179.2
(22) Anmeldetag: 22.01.1999
(51) Int. Cl.: F16L 41/08, F16L 37/00

(54) **Anschlussarmatur mit einem Befestigungsvorsprung**
Connecting device with mounting protrusion
Dispositif de raccordement avec saillie de montage

(30) Priorität: 19.03.1998 DE 19812079
(43) Veröffentlichungstag der Anmeldung: 22.09.1999
(73) Patentinhaber: Anton Hummel Verwaltungs-GmbH, D-79183 Waldkirch (DE)
(72) Erfinder: Bartholomä, Mario, 79297 Winden (DE); Götz, Volker, 79341 Kenzingen (DE); Zügel, Fritz, 79183 Waldkirch (DE); Adolf, Jürgen, 79211 Denzlingen (DE)
(74) Vertreter: Patent- und Rechtsanwaltssozietät, Maucher, Börjes & Kollegen

(56) Entgegenhaltungen:
- US-A- 3 514 129
- US-A- 4 441 744

## Beschreibung

Die Erfindung betrifft eine Anschlußarmatur, auch eine Winkel- oder T-förmige Anschlußarmatur, zum Befestigen von länglichen Körpern, beispielsweise von Schläuchen, Wellschläuchen, Rohren, Kabeln oder dergleichen, an einer Öffnung oder einem Durchbruch oder einer Lochung, zum Beispiel in einer Wand eines Gehäuses oder dergleichen, wobei die Anschlußarmatur wenigstens einen Befestigungsvorsprung aufweist, der durch offene Schlitze in Widerlagerzungen aufgeteilt ist, an deren freien Enden radial nach außen vorstehende Haltevorsprünge angeordnet sind, wobei diese Widerlagerzungen beim Einschieben des Befestigungsvorsprunges in die Öffnung, den Durchbruch oder dergleichen Lochung durch deren Lochungsrand radial nach innen verformbar sind und hinter dem Rand in die Halteposition gelangen, in welcher die Haltevorsprünge diesen Rand zumindest teilweise hintergreifen, und wobei mit Abstand zu den Haltevorsprüngen wenigstens ein Anschlag angeordnet ist, der in Gebrauchsstellung an dem dem hintergriffenen Rand der Lochung oder dergleichen gegenüberliegenden Lochungsrand anliegt, wobei die Anschlussarmatur in ihrem Inneren eine ihr zugehörige axial verschiebbare Sperre aufweist, die in Löseposition außerhalb des Bereiches der Widerlagerzungen oder Haltevorsprünge und in Gebrauchsstellung zwischen diese eingreifend angeordnet ist und die Haltevorsprünge in dieser Gebrauchsstellung gegen eine radiale Verformung nach innen sperrt, wobei die Widerlagerzungen und die demgegenüber radial vorstehenden Rast- oder Haltevorsprünge so geformt und/oder bemessen sind, daß sie nach dem Einschieben in die Öffnung oder dergleichen lösbar an dem Rand einrasten und unter entgegen der Einsteckrichtung wirkender Belastung oder unter Zug- und/oder Schwenkbelastung wieder aus der Öffnung oder dergleichen herausbewegbar oder zurückziehbar sind.

Eine derartige Anschlußarmatur - allerdings nur in Stutzenform, also nicht in winkel- oder T-förmiger Gestaltung - ist aus der US-Patentschrift A 4 441 744 bekannt. Die radial nach außen vorstehenden Haltevorsprünge der Widerlagerzungen sind dabei aufgrund ihrer Elastizität und Formgebung nach dem Einrasten hinter dem Rand der Lochung oder des Durchbruches praktisch nicht mehr lösbar, sondern die Haltevorsprünge nehmen ihre Halteposition in Gebrauchsstellung nach dem Einstecken des Befestigungsvorsprunges in die Lochung oder den Durchbruch selbsttätig ein. Die Widerlagerflächen der Haltevorsprünge sind dabei so gestaltet, daß sie den Lochungsrand mit ihrer ganzen Fläche hintergreifen, damit sie beim Anziehen einer als Anschlag dienenden Überwurfmutter nicht ungewollt wieder in die Lochung oder den Durchbruch zurückgezogen werden können. Dabei können allerdings die Widerlagerzungen des Befestigungsvorsprungs aufgrund der Schlitzung von außen her radial nach Innen verformt und so die Anschlussarmatur wieder gelöst werden. Um eine ungewollte derartige Lösung zu verhindern, ist die im Inneren axial verstellbare Sperre vorgesehen, die in ihrer Sperrstellung zwischen den Widerlagerzungen deren radiale Verformung nach innen verhindert.

Dies bedeutet aber, daß im Falle einer Demontage dieser Anschlußarmatur die Widerlagerzungen mittels eines Werkzeuges einwärtsgedrückt werden müssen. Dies ist vor allem deshalb schwierig, weil bei der vorbekannten Lösung im Bereich der Haltezungen außenseitig ein umlaufender, nutenförmiger Rand zur Aufnahme einer zusätzlichen Dichtung vorgesehen ist, durch den die Zugänglichkeit zu den Widerlagerzungen von außen her erschwert ist. Eine statt dessen von der Rückseite oder Innenseite der den Durchbruch oder die Öffnung aufweisenden Wandung durchzuführende Montage wäre schwierig, weil diese Rückseite häufig kaum zugänglich ist.

Es besteht deshalb die Aufgabe, eine Anschlußarmatur der eingangs genannten Art zu schaffen, mit der einerseits ein fester Sitz an einem Durchbruch oder einer Lochung in einer Wand, beispielsweise einer Gehäusewand, erzielt werden kann, trotzdem aber eine einfache Montage von der Außenseite eines solchen Gehäuses bzw. von der Seite des Eintrittes des länglichen Körpers in den Durchbruch oder die Lochung möglich ist.

Zur Lösung dieser scheinbar widersprüchlichen Aufgabe ist die eingangs definierte Anschlußarmatur dadurch gekennzeichnet, daß die Widerlagerzungen an ihrem in Gebrauchsstellung innerhalb des Durchbruches oder der Lochung befindlichen Bereich eine geringere Außenabmessung, nämlich einen kleineren Außenumfang oder Durchmesser als der Durchbruch oder die Lochung haben und mittels der in axialer Richtung zwischen sie verschiebbaren Sperre aufweitbar oder aufspreizbar sind.

Auf diese Weise ist es möglich, die Anschlußarmatur von der Außenseite eines Gehäuses her bzw. von der Seite einer Wandung zu demontieren, an der sie - von ihrem Befestigungsvorsprung abgesehen - angeordnet ist. Nach dem Lösen der Sperre kann sie herausgezogen werden. Dennoch sitzt sie in Gebrauchsstellung bei in Funktionslage befindlicher, also in axialer Richtung zwischen die Rastzungen und Haltevorsprünge verschobener Sperre fest und kann auf den länglichen Körper, also ein Rohr, einen Schlauch, ein Kabel oder dergleichen, ausgeübte Zugkräfte aufnehmen. Ist die Sperre hingegen aus ihrer Gebrauchs- und Funktionslage axial zurückbewegt oder zurückverschoben, können die Haltevorsprünge unter entgegen der Einsteckrichtung wirkender Kraft oder Belastung, insbesondere Zugbelastung, gegebenenfalls bei gleichzeitiger Verschwenkung der Anschlußarmatur in radialer Richtung nach innen zurückverformt werden, so daß auf diese Weise der Befestigungsvorsprung der Anschlußarmatur aus dem Durchbruch oder der Lochung wieder herausgezogen werden kann.

Durch die geringere Außenabmessung des in Gebrauchsstellung innerhalb des Durchbruchs oder der Lochung oder Öffnung befindlichen Bereichs der Widerlagerzungen ergibt sich bei noch nicht aufgespreizten Widerlagerzungen eine geringere, nämlich nur teilweise Berührung der Widerlager- oder Rastflächen der Haltevorsprünge an dem von ihnen hintergriffenen Rand der Lochung oder des Durchbruchs. Die Haltevorsprünge hintergreifen also die Lochung oder den Durchbruch nicht mit einer für eine feste Verankerung ausreichenden und/oder nicht mit ihrer gesamten Abmessung, sondern gewissermaßen nur mit ihrem radial äußeren Endbereich, so dass ohne die zwischen sie verschobene Sperre eine übliche oder relativ geringe Zugkraft ausreicht, um sie wieder aus der Lochung oder dem Durchbruch herauszuziehen. Dennoch werden sie zunächst einmal in der Lochung oder dem Durchbruch gehalten. Erst durch das Einschiebender Sperre in deren Funktionsstellung werden dann die Widerlagerzungen oder - finger so aufgeweitet, dass ihre Rast- oder Widerlagerflächen ausreichend oder voll zum Tragen kommen, und ohne Entfernen der Sperre nicht mehr ohne irgendeine Zerstörung herausgezogen werden können.

Eine Ausgestaltungsmöglichkeit kann dabei darin bestehen, daß die Rastflächen der Haltevorsprünge, die in Gebrauchsstellung den inneren Rand der Lochung oder des Durchbruches hintergreifen und an diesem Rand anliegen, gegenüber einer radial zu der Anschlußarmatur verlaufenden Ebene abgeschrägt sind, wobei die Schrägung von innen nach außen von den Rändern des Durchbruches weg verläuft, so daß ein von der Innenseite der Lochung weg gerichteter, sich erweiternder Konus besteht. Bei einem Zurückziehen der Anschlußarmatur für eine Demontage bewirkt dieser Konus dann die radiale Verbiegung der Widerlagerzungen nach innen, was aber nur möglich ist, wenn vorher die Sperre aus ihrem Bereich zurückverschoben wurde.

Die in Gebrauchsstellung dem Rand des Durchbruches zugewandten Schrägflächen der Haltevorsprünge können konkav oder ballig konvex und/oder bereichsweise geradlinig verlaufen. Es können also je nach Anforderungen an die Haltekraft unterschiedlich geformte Schrägflächen als Rastflächen an den Haltevorsprüngen vorgesehen werden. Dadurch kann der Widerstand gegen ein Zurückziehen mehr oder weniger groß gemacht werden. Dies kann dann vorteilhaft sein, wenn eine erste, durch Zurückziehen wieder aufhebbare Verrastung bei der Montage schon gewisse Kräfte übertragen können soll.

Für eine gute Halterung in Gebrausstellung ist es zweckmäßig, wenn der in Gebrauchsstellung innerhalb des Durchbruchs oder Lochung befindliche Bereich geringerer Außenabmessung der Widerlagerzungen durch die Sperre an die Innenseite der Öffnung andruckbar ist.

Zweckmäßigerweise wird also die Anschlußarmatur so gestaltet, daß die Halteflächen der Widerlagerzungen bei nicht durch die Sperre gespreizten Widerlagerzungen den Umfang des Durchbruches oder der Lochung nur um einen Teil ihrer Abmessung derart überragen, daß die Armatur bei außerhalb der Widerlagerzungen befindlicher Sperre an dem Durchbruch zurückziehbar gehalten ist. Somit kann sie eine Vormontagestellung einnehmen und auch halten oder nach einer festen Montage durch Zurückziehen der Sperre in eine solche Lage gebracht werden, aus der sie dann problemlos wieder zurückziehbar ist, da die Widerlagerzungen elastisch federnd ausgebildet sind und sich nach dem Zurückziehen der Sperre von selbst radial einwärts bewegen.

Eine zweckmäßige und vorteilhafte Ausgestaltung der Erfindung kann darin bestehen, daß die axial verschiebbare, insbesondere hülsenförmige Sperre wenigstens einen radial nach innen und/oder außen vorstehenden Vorsprung hat, der durch das Einschieben des länglichen Körpers in das Innere der Anschlußarmatur beaufschlagbar ist. Somit kann durch das Einschieben des länglichen Körpers gegen oder in die Sperre diese in ihre Gebrauchsstellung, das heißt in ihre Sperrstellung, verschoben werden. Es kann also erreicht werden, daß die zunächst nur in einer Vormontagestellung - auch wieder zurückziehbar - gehaltene Anschlußarmatur durch das Einschieben des mit ihr zu haltenden länglichen Körpers in ihrer Gebrauchsstellung gesperrt und verriegelt und gegen Rückzugskräfte gesichert wird, indem das Einschieben des zu haltenden länglichen Körpers automatisch auch das Verschieben der Sperre in deren Sperrstellung bewirkt.

Dabei kann der nach innen vorstehende Vorsprung in der Sperre gegen eine Rückstellkraft verformbar oder umbiegbar sein. Dadurch ist es möglich, dass dieser innen vorstehende Vorsprung in Gebrauchsstellung mit Druck an der Außenseite des länglichen Körpers anliegt. Somit kann der längliche Körper diesen nachgiebigen Vorsprung beim Einschieben und bei seiner Beaufschlagung zwar verformen und umbiegen, gelangt dabei aber automatisch in Reibschluß mit diesem Vorsprung, so daß die Sperre mitgenommen und in Gebrauchsstellung verschoben werden kann. Darüber hinaus kann sie bei entsprechender Gestaltung gleichzeitig eine Dichtwirkung haben.

Dazu kann es vorteilhaft sein, wenn im Inneren der Sperre als Vorsprung wenigstens eine radial nach innen vorstehende, insbesondere am gesamten Innenumfang der Sperre angeordnete Lippe vorgesehen ist. Eine solche Lippe kann besonders gut durch das Einschieben des länglichen Körpers verformt und somit für den Durchtritt dieses länglichen Körpers geöffnet werden, so daß sie sich unter dem Druck ihrer Rückstellkraft an der Außenseite des länglichen Körpers anlegt. Dies bewirkt die schon erwähnte Verschiebung der Sperre beim Einschieben des länglichen Körpers, beispielsweise eine Kabels, bis die Sperre an einen Anschlagbund oder Gegenanschlag innerhalb der Anschlußarmatur gelangt, wo sie ihre endgültige Gebrauchsstellung erreicht hat.

Es ist also zweckmäßig, wenn innerhalb der Anschlußarmatur ein Anschlag für die Sperre nach innen vorsteht. Neben dieser Funktion der Lippe, das automatische Verschieben der Sperre zu bewirken, kann sie, wie auch schon erwähnt, als zusätzliche Dichtung wirken, wenn der im Inneren der Sperre radial vorstehende Vorsprung oder die Lippe am Innenumfang der Sperre ununterbrochen umlaufend angeordnet ist.

Der innenliegende Anschlag für die Sperre kann am Anfang der Rastzungen angeordnet sein. Durch diesen innenliegenden Anschlag kann also die Gebrauchs- und Funktionslage der Sperre, in welcher sie eine Rückfederbewegung der Widerlagerzungen radial nach innen verhindert, vorgegeben oder vorbestimmt sein.

Eine vorteilhafte Ausgestaltung der Anschlußarmatur und insbesondere ihrer Sperre kann vorsehen, daß eine axiale Verstellung der Sperre auch unabhängig von dem festzulegenden länglichen Körper erfolgen kann, so daß also dieser längliche Körper zunächst nahezu widerstandslos in seine gewünschte Lage gebracht und anschließend die Sperre in ihre Sperrlage verstellt werden kann. Umgekehrt kann aber auch eine Abschlußarmatur mit der Sperre festgelegt werden, ohne daß ein länglicher Körper erfaßt ist. Dies kann vor allem bei Winkelstücken vorteilhaft sein, die lediglich dazu dienen, Kabel oder dergleichen biegsame längliche Körper in eine bestimmte Richtung zu orientieren.

Diese zweckmäßige Ausgestaltung kann darin bestehen, daß die Sperre als Hülse ausgebildet ist, welche - insbesondere an ihrem der Sperrstelle abgewandten Rand - wenigstens einen gegenüber ihrer Außenseite radial nach außen vorstehenden Betätigungsvorsprung hat, der die Außenabmessung der hülsenförmigen Sperre überragt und in einen axial verlaufenden Schlitz zwischen Widerlagerzungen eingreift und durch diesen nach außen vor- und übersteht. Somit kann der Benutzer diesen Betätigungsvorsprung in geeigneter Weise erfassen und in Orientierungsrichtung des von ihm durchsetzten Schlitzes, also in axialer Richtung verschieben, wodurch die hülsenförmige Sperre in ihre entsprechende Lage, insbesondere in Sperrlage gebracht werden kann.

Besonders zweckmäßig ist es dabei, wenn zum axialen Verstellen des oder - noch besser - der mehreren Betätigungsvorsprünge an der Außenseite der Anschlußarmatur ein axial verstellbarer und festlegbarer, den oder die Befestigungsvorsprünge beaufschlagender Ring vorgesehen ist. Da mehrere Widerlagerzungen vorhanden sind, sind auch mehrere Schlitze zwischen diesen gleichmäßig am Umfang der Anschlußarmatur und ihres Befestigungsvorsprunges verteilt, so daß entsprechend viele Betätigungsvorsprünge an der innenliegenden Sperre angeordnet und durch diese Schlitze nach außen geführt sein können, wobei aber die Zahl dieser Befestigungsvorsprünge nicht unbedingt der der Schlitze entsprechen muß. Dies ermöglicht nun die Anordnung eines einzigen Betätigungsringes, der alle diese Vorsprünge, die zweckmäßigerweise in einer gemeinsamen Durchmesserebene liegen, erfassen und bei seiner eigenen axialen Verstellung mitnehmen kann. Entsprechend einfach ist die Bedienung.

Eine günstige konstruktive Lösung kann dabei darin bestehen, daß im Inneren des Ringes wenigstens eine Ringnut angeordnet ist, in die der oder die radial vorstehenden Betätigungsvorsprünge formschlüssig eingreifen. Somit kann dieser zum Verstellen der Sperre dienende Ring in beiden axialen Richtungen verschoben werden und die Sperre jeweils entweder in Sperrstellung oder aber außer Sperrstellung bringen.

Es wurde schon angedeutet, daß die hülsenförmige Sperre an ihrem Umfang verteilt mehrere, jeweils durch Axialschlitze voneinander getrennte Betätigungsvorsprünge aufweisen kann, die von durch die Schlitze getrennten federnden Leisten einstückig gehalten sein können. Diese federnden, jeweils einen Betätigungsvorsprung tragenden Leisten können also in radialer Richtung verformt werden, so daß es möglich ist, den Betätigungsring mit seiner inneren Ringnut über die Befestigungsvorsprünge zu schieben, indem diese radial nach innen verformt werden, bis die Ringnut an der Steile der Betätigungsvorsprünge ist, wonach sie aufgrund ihrer Elastizität mit diesen Betätigungsvorsprüngen in die Nut einfedern und dadurch wieder ihre Ausgangslage haben, nun aber von dem Betätigungsring und dessen Ringnut übergriffen werden.

Dabei kann die Sperre an ihrem der Sperrstelle abgewandten Ende am Umfang verteilt mehr axiale Schlitze als radial vorstehende Vorsprünge, insbesondere doppelt so viele Axialschlitze wie Betätigungsvorsprünge aufweisen. Somit muß nicht an jeder federnden Leiste der Sperre ein solcher Vorsprung vorgesehen werden und dennoch ergibt sich eine ausreichend große Zahl von gleichmäßig am Umfang verteilten Betätigungsvorsprüngen, um sie gemeinsam mit Hilfe eines Ringes erfassen und ohne Gefahr einer Verkantung verschieben zu können.

Eine für die Bedienung besonders günstige Ausgestaltung kann dabei vorsehen, daß der zum Verstellen der Sperre dienende Ring eine Mutter ist, deren Innengewinde mit einem an der Anschlußarmatur außen vorgesehenen Verstellgewinde zusammenpaßt, welches Verstellgewinde an den Außenseiten der Widerlagerzungen sich über die zwischen diesen befindlichen Schlitze jeweils fortsetzend angeordnet ist. Selbstverständlich reicht dabei das Innengewinde dieser Mutter nicht über eine innenliegende Ringnut hinaus, sondern endet an oder vor dieser. Für eine Verstellbewegung braucht der Ring dann lediglich verdreht zu werden, um aufgrund der zusammenwirkenden Gewinde diese Drehbewegung in die gewünschte axiale Verstellbewegung umzusetzen.

Das Verschieben der Sperre in Sperrstellung kann - unabhängig davon, wie die Verstellbewegung durchgeführt wird - dadurch erleichtert sein, daß der im Sperrbereich befindliche stirnseitige Rand der Sperre an der Außenseite abgeschrägt und/oder abgerundet ist. Somit ergibt sich eine allmähliche Verdrängung und Verschwenkung der Widerlagerzungen in deren außenliegende Sperrstellung, wenn die Sperre allmählich zwischen diese eingeschoben und dann weiter vorgeschoben wird.

Es sei noch erwähnt, daß der zum Verstellen der Sperre dienende Ring bei einer Ausgestaltung als Mutter gleichzeitig zum axialen Festlegen der gesamten Armatur herangezogen werden kann.

In üblicher Weise kann der längliche Körper, zum Beispiel ein Kabel, Rohr, Schlauch oder dergleichen mit Hilfe einer außenseitigen Verschraubung an der Armatur in geeigneter Weise zur Zugentlastung verklemmt oder festgelegt werden. Für die Demontage braucht zunächst nur eine derartige außenseitige Verschraubung oder Befestigung gelöst und dann der längliche Körper zurückgezogen zu werden, wodurch die klemmend oder reibschlüssig mit ihm verbundene Sperre ebenfalls automatisch zurückgezogen wird, so daß dadurch die Widerlagerzungen für ein elastisches Zurückfedern radial nach innen freigegeben werden und die Anschlußarmatur nur noch gegen eine relativ geringe Kraft festlegen, so daß sie leicht aus ihrer Lochung oder ihrem Durchbruch herausgezogen werden kann. Es ergibt sich also eine sehr einfache Demontierbarkeit insbesondere dann, wenn einzelne oder mehrere der vorbeschriebenen Merkmale und Maßnahmen kombiniert werden.

Nachstehend sind Ausführungsbeispiele der Erfindung anhand der Zeichnung näher beschrieben. Es zeigt in zum Teil schematisierter Darstellung:
- Fig.1: eine teilweise im Längsschnitt dargestellte Seitenansicht einer erfindungsgemäßen Anschlußarmatur für ein durch eine Wand-Öffnung hindurchführbares und dort festlegbares Kabel in Vormontagestellung, in welcher Halte- oder Rastvorsprünge von Rastzungen dieser Anschlußarmatur lösbar am Rand der Wand-Öffnung eingerastet und entgegen der Einsteckrichtung wieder beispielsweise durch eine Zugbelastung auf die Anschlußarmatur aus der Öffnung zurückziehbar sind, wobei diese nur teilweise Verrastung in der Einzelheit A vergrößert dargestellt ist,
- Fig.2: eine der Fig.1 entsprechende Darstellung nach der endgültigen Verrastung durch axiales Verschieben einer im Inneren der Anschlußarmatur befindlichen Sperre, wobei die endgültige Rast- und Sperrposition wiederum in einer Einzelheit B vergrößert dargestellt ist,
- Fig.3: eine teilweise im Längsschnitt gehaltene Ansicht der in Fig.1 und 2 vorgesehenen Sperre und eines Kabelendes vor dem Einführen des Kabels,
- Fig.4: eine der Fig.3 entsprechende Darstellung nach dem Einschieben des Kabels, wodurch dieses mit einer innenliegenden Lippe in Kraftschluß gelangt, so daß das Einschieben des Kabels in Einsteckrichtung auch die Sperre in Sperrstellung bewegt,
- Fig.5: eine abgewandelte Ausführungsform der erfindungsgemäßen Anschlußarmatur, die dabei zum Festlegen eines Wellschlauches dient, wobei sich die Sperre noch in Offenstellung befindet und die Haltevorsprünge nur teilweise verrastet sind mit vergrößerter Darstellung der Einzelheit C, die diese nur teilweise Verrastung vergrößert zeigt,
- Fig.6: eine der Fig.5 entsprechende Darstellung in der endgültigen Rast- und Sperrposition mit vergrößerter Darstellung der Verrastung eines Haltevorsprunges in der Einzelheit D,
- Fig.7: die für das Ausführungsbeispiel gemäß Fig.5 und 6 vorgesehene Sperre und den Wellschlauch vor ihrem Zusammenwirken,
- Fig.8: eine teilweise im Längsschnitt gehaltene Seitenansicht der Sperre und des Wellschlauches in Wirkverbindung, in welcher die Stirnseite des Wellschlauches sich auf einem außen umlaufenden Anschlag oder Bund der Sperre abstützt, so daß das Einschieben des Wellschlauches in das Innere der Armatur gleichzeitig die Sperre in Sperrstellung gemäß Fig.6 verschiebt, in welcher sie mit diesem Anschlag oder Bund ihrerseits innerhalb der Anschlußarmatur anschlägt,
- Fig.9: ein weiteres Ausführungsbeispiel einer Anschlußarmatur, die dabei als Winkelstück gestaltet ist und gemäß der vergrößerten Einzelheit E noch nicht endgültig verrastet ist und eine Sperre aufweist, die mittels radial nach außen vorstehender Vorsprünge insbesondere mit Hilfe eines verschraubbaren Ringes axial verschiebbar ist,
- Fig.10: eine der Fig.9 entsprechende Darstellung nach dem Verschieben der Sperre durch axiales Verschrauben des die Vorsprünge der Sperre erfassenden Ringes, wobei die verrastete Position gleichzeitig vergrößert in der Einzelheit F verdeutlicht ist,
- Fig.11: eine teilweise im Längsschnitt gehaltene Seitenansicht sowie
- Fig.12: eine Draufsicht der mit radial vorstehenden Vorsprüngen versehenen Sperre, die in dem Ausführungsbeispiel gemäß Fig.9 und 10 vorgesehen ist, aber auch bei einer nicht als Winkelstück gestalteten Armatur in gleicher Weise verwendbar wäre.

In der nachfolgenden Beschreibung verschiedener Ausführungsbeispiele erhalten in ihrer Funktion übereinstimmende Gegenstände oder Teile auch bei unterschiedlicher äußerer Gestaltung übereinstimmende Bezugszahlen.

Eine im ganzen mit 1 bezeichnete Anschlußarmatur dient zum Befestigen von länglichen Körpern 2, beispielsweise von Schläuchen, Wellschläuchen, Rohren, Kabeln oder dergleichen, die demgemäß in der nachfolgenden Beschreibung jeweils mit "2" bezeichnet sind, an einer Öffnung 3 in einer Wand 4 beispielsweise eines Gehäuses oder dergleichen.

Die Anschlußarmatur 1 weist dabei jeweils einen im ganzen mit 5 bezeichneten Befestigungsvorsprung auf, der in Gebrauchsstellung gegenüber dem größeren Teil der Anschlußarmatur 1 auf der anderen Seite der Wand 4 angeordnet ist. Die Öffnung 3 ist dabei in der Regel eine kreisrunde Lochung oder ein vergleichbarer Durchbruch.

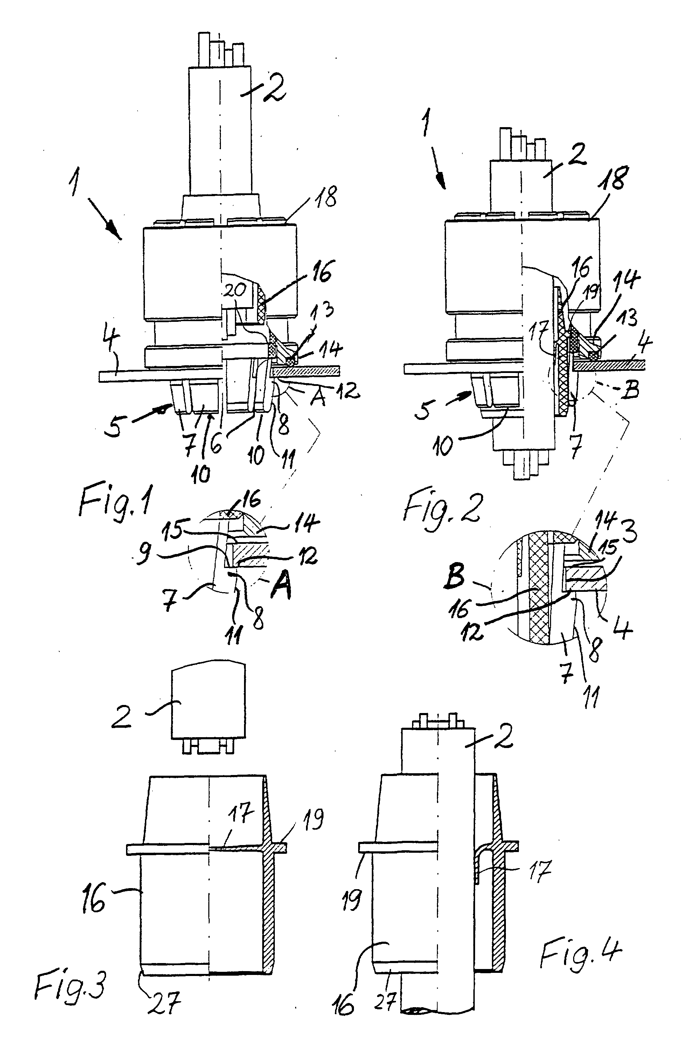

Der Befestigungsvorsprung 5 ist gemäß den Figuren 1 und 2, 5 und 6 sowie 9 und 10 durch in axialer Richtung zum freien Ende des Befestigungsvorsprunges 5 hin verlaufende und dort offene, auch in radialer Richtung durchgehende Schlitze 6 in mehrere am Umfang gleichmäßig verteilte Widerlagerzungen 7, im folgenden auch kurz "Zungen 7" genannt, aufgeteilt. Am freien Ende dieser Zungen 7, also an dem im größten Teil der Anschlußarmatur 1 abgewandten Ende, weisen diese Zungen 7 radial nach außen vorstehende Haltevorsprünge 8 auf, wobei die Figuren verdeutlichen, daß dabei diese Vorsprünge 8 von ihrer eigentlichen Rast- und Haltefläche 9 ausgehend zur Stirnseite 10 des Endes dieser Zungen 7 noch einen Abstand haben, das heißt, die Haltevorsprünge 8 haben eine gewisse axiale Ausdehnung. Somit können sie an ihrer Außenseite 11 konisch oder schräg verlaufen, um das Einführen in die Öffnung 3 und ein dadurch bewirktes elastisches Zusammendrücken in radialer Richtung zur Mitte hin zu erleichtern, bis die Rast- und Halteflächen 9 gegenüber dem übrigen Teil der Armatur 1 hinter die Wandung 4 gelangen, um in der dann erreichten Gebrauchsstellung an dem nunmehrhintergriffenen Rand 12 der Öffnung 3 zur Anlage zu kommen.

Dabei ist mit Abstand zu den Haltevorsprüngen 8 und ihren Halteflächen 9 ein in allen Ausführungsbeispielen eine Dichtung 13 enthaltender Anschlag 14 vorgesehen, der in Gebrauchsstellung von den Halteflächen 9 einen Abstand hat, der der Dicke der Wand 3 entspricht, so daß dieser Anschlag 14 in Gebrauchsstellung an dem dem hintergriffenen Rand 12 der Öffnung 3 gegenüber lieganden Lochungsrand 15 anliegt.

In den Figuren 1, 5 und 9 ist dargestellt, daß die federelastisch verschwenkbaren Widerlagerzungen 7 und die demgegenüber radial vorstehenden Halte- oder Rastvorsprünge so geformt und bemessen sind, daß sie nach dem Einschieben in den Durchbruch oder die Öffnung 3 mit ihren Rast- und Halteflächen 9 nur teilweise und damit lösbar an dem Rand 12 einrasten und unter einer entgegen der Einsteckrichtung wirkenden Belastung, beispielsweise einer Zugbelastung auf die Armatur 1, oder aber auch eine Druckbelastung auf den Befestigungsvorsprung 5, gegebenenfalls kombiniert mit einer Schwenkbelastung, wieder aus dem Durchbruch oder der Öffnung 3 herausbewegbar oder zurückziehbar sind. Vor allem in den Einzelheiten A, C und E erkennt man, daß nur ein ganz geringer Teil der jeweiligen Rast- und Haltefläche 9 der Haltevorsprünge 8 den Rand 12 der Öffnung 3 hintergreift, so daß geringfügige in axialer Richtung entgegen der Einsteckrichtung wirkende Kräfte eine solche Verbindung wieder lösen können. Die Armatur 1 kann also gemäß den erwähnten Figuren 1, 5 und 9 in einer Vormontagestellung lösbar an einer Öffnung oder dergleichen Durchbruch 3 fixiert werden. In gleicher Weise kann auf diese Weise die gesamte Armatur 1 wieder demontiert werden, wenn die nachfolgend erläuterte Sperre 16 aus ihrer Sperrstellung zurückbewegt wird, so daß die Haltevorsprünge 8 aufgrund der Elastizität der Widerlagerzungen 7 ebenfalls in diese "Vormontagestellung" zurückweichen.

Die Anschlußarmatur weist die schon erwähnte, axial verschiebbare Sperre 16 auf, die in Löseposition gemäß den Figuren 1, 5 und 9 außerhalb des Bereiches der Zungen 7 und Haltevorsprünge 8 und in Gebrauchsstellung gemäß den Figuren 2, 6 und 10 zwischen diese eingreifend angeordnet ist, wobei sie von der erstgenannten Löseposition in die Sperrposition in axialer Richtung verschoben wird. In dieser Sperrposition sperrt sie die Zungen 7 gegen eine radial nach innen gerichtete Verformung oder Verschwenkung, wobei sie sie außerdem bei dieser Sperrbewegung aus der lösbaren Verrastungslage radial weiter nach außen verschwenkt und verformt, so daß sie die Haltevorsprünge 8 in die vor allem in den Einzelheiten B, D und F verdeutlichte Halteposition bringt, in der die Rastund Halteflächen 9 mehr oder weniger vollständig wirksam sind und den Rand 12 der Öffnung 3 hintergreifen.

Im Ausführungsbeispiel liegen die Past- und Halteflächen 9 in einer radialen Ebene, was eine gute Haltekraft und widerhakenartige Verbindung mit dem Öffnungsrand 12 ergibt. Aufgrund der Sperre 16 wäre es jedoch auch möglich, die Rastflächen 9 der Haltevorsprünge 8 gegenüber einer radial zu der Anschlußarmatur 1 verlaufenden Ebene etwas abgeschrägt zu gestalten, wobei die Schrägung von innen nach außen von den Rändern 12 des Durchbruches 3 weg verlaufen, so daß ein von der Innenseite der Lochung 3 weg gerichteter, sich erweiternder Konus gebildet wäre. Dies ergäbe eine noch besser lösbare Vormontagestellung, bei welcher die Haltevorsprünge 8 den Rand 1 2 um ein größeres Maß in radialer Richtung übergreifen könnten, weil sie bei einer entgegen der Einsteckrichtung wirkenden Belastung aufgrund der Schrägung der Halteflächen 9 leichter wieder radial nach innen zurückweichen könnten, jedoch ergäbe sich eine geringere Auflagefläche in Sperrposition.

In Fig.1, 5 und 9 ist verdeutlicht, daß die Widerlagerzungen 7 in ihrem in Gebrauchsstellung innerhalb des Durchbruches 3 oder der Öffnung oder Lochung befindlichen Bereich eine geringere Außenabmessung, insbesondere einen kleineren Außenumfang oder Durchmesser als der Durchbruch oder die Öffnung 3 haben und mittels der in axialer Richtung zwischen sie verschiebbaren Sperre 16 aufweitbar oder aufspreizbar sind, wie es der Vergleich jeweils zwischen Fig.1 und 2 oder Fig.5 und 6 oder Fig.9 und 10 zeigt. Es ist also an dem Befestigungsvorsprung 5 ein im Durchmesser gegenüber den Haltevorsprüngen 8 reduzierter Halsbereich vorgesehen, der in Gebrauchsstellung innerhalb der Öffnung oder Lochung 3 verläuft und durch die Sperre 16 an die Innenseite der Öffnung 3 angedrückt werden kann.

Die wieder lösbare Halterung der Anschlußarmatur 1 ist in den Ausführungsbeispielen dadurch verwirklicht, daß die Halteflächen 9 der Haltevorsprünge 8 der Widerlagerzungen 7 bei nicht gespreizten Widerlagerzungen 7 den Umfang der Öffnung 3 oder des Durchbruches oder der Lochung nur um einen Teil ihrer Abmessung, nämlich mit ihren radial außenliegenden Bereichen derart überragen, daß die Armatur 1 bei außerhalb der Widerlagerzungen 7 befindlicher Sperre 16 an der Öffnung 3 zurückbewegbar gehalten ist. Es genügt, bei zurückgezogener Sperre 16 an der Armatur 1 eine Zugbewegung, gegebenenfalls mit einer Schwenk- und Kippbewegung kombiniert, auszuüben, um sie wieder aus der Öffnung 3 herausbewegen zu können. Somit kann die Armatur 1 auch demontiert werden, indem die Sperre 16 aus ihrer Sperrlage zurückgezogen oder zurückbewegt und danach die schon erwähnte Lösebewegung an der Armatur 1 aufgebracht werden, da sich die Widerlagerzungen 7 aufgrund ihrer Federwirkung selbsttätig in die Vormontagestellung zurückbewegen.

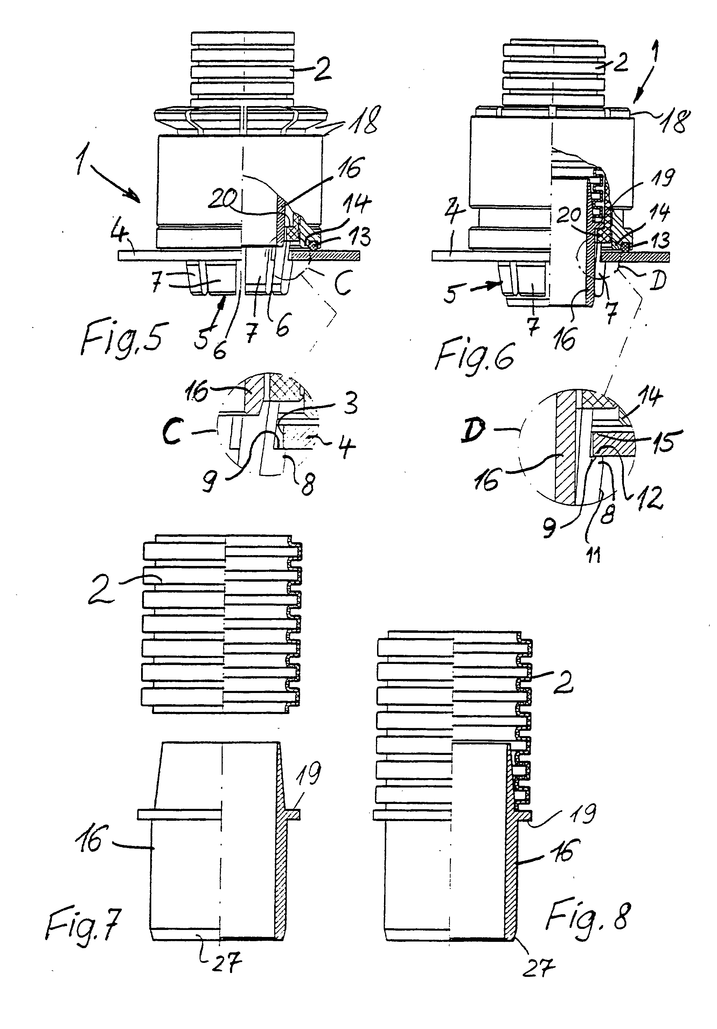

In den Figuren 3 und 4, 7 und 8 sowie 11 und 12 sind jeweils etwas verschiedenartig gestaltete Sperren 16 dargestellt. Gemeinsam ist diesen Ausführungsformen der Sperre 16, daß sie jeweils hülsenförmig gestaltet ist. Außerdem hat sie jeweils wenigstens einen radial nach innen (Fig.3 und 4) oder radial nach außen (Fig.7 und 8 sowie Fig.11 und 12) oder sogar gemäß Fig.3 und 4 einen radial nach innen und einen radial nach außen vorstehenden Vorsprung, der im folgenden jeweils näher erläutert wird und in den Beispielen gemäß Fig.3,4,7 und 8 durch das Einschieben des länglichen Körpers 2 in das Innere der Armatur 1 jeweils beaufschlagbar ist.

Fig.3 und 4 zeigt dabei als Vorsprung eine radial nach innen vorstehende, insbesondere am gesamten Innenumfang der Sperre 16 angeordnete Lippe 17. Dabei ist dieser im Inneren der Sperre 16 radial vorstehende Vorsprung, also diese Lippe 17 am Innenumfang der Sperre 16 ununterbrochen umlaufend angeordnet, könnte aber auch durch radiale Schlitze unterbrochen sein.

Diese Anordnung eignet sich besonders gut dann, wenn ein Kabel oder ein sonstiger länglicher Körper 2 von relativ geringer Außenabmessung mit der Anschlußarmatur 1 befestigt werden soll, wie es in den Figuren 1 bis 4 dargestellt ist. Ein derartiges Kabel 2 kann dann beim axialen Einschieben in die Sperre 16 die innen umlaufende Lippe 17 in Einsteckrichtung verdrängen und umbiegen, wodurch diese sich kraftschlüssig an die Außenseite eines derartigen Kabels 2 anlegt, so daß das Einschieben des Kabels 2 die Sperre in axialer Richtung mitnimmt und aus der in Fig.1 dargestellten Löseposition in die in Fig.2 befindliche Sperrstellung bringt. Ist diese Position erreicht, kann das Kabel 2 in üblicher Weise mit einer an der Anschlußarmatur 1 befindlichen Klemmeinrichtung 18 fixiert werden. Somit kann nach dem Lösen dieser Klemmeinrichtung 18 das Kabel wieder zurückgezogen werden, wobei es dann auch die Sperre 16 mitnimmt, so daß die Anschlußarmatur 1 danach wieder die nur teilweise oder lösbar verrastete Halteposition gemäß Fig.1 einnimmt und leicht demontiert werden kann.

Die Figuren 5 bis 8 zeigen eine Lösung, bei welcher die Sperre einen außenseitig vorstehenden Vorsprung als Anschlagbund 19 trägt, an welchem die Stirnseite eines Wellschlauches 2 zur Anlage kommen kann, wenn dieser in die Anschlußarmatur 1 eingeschoben wird. Somit wird durch das Einschieben eines Wellschlauches 2 in die Anschlußarmatur 1 ebenfalls eine Verschiebung dieser Sperre 16 und damit die endgültige Verschwenkung der Widerlagerzungen 7 in ihre Halteposition bewirkt.

Dabei ist außerdem innerhalb der Anschlußarmatur 1 ein Anschlag 20 für die Sperre 16 vorgesehen, so daß diese nur bis in ihre Sperrstellung und nicht etwa darüber hinaus verschoben werden kann. Dabei kann dieser außenseitige Anschlagbund 19, der auch im Ausführungsbeispiel gemäß Fig.1 bis 4 zusätzlich zu der innenliegenden Lippe 17 vorgesehen ist, mit diesem innenliegenden Anschlag 20 in der Anschlußarmatur 1 zusammenwirken, wie man es in Fig.2 und 6 erkennt.

Der innenliegende Anschlag 20 ist dabei in den Ausführungsbeispielen gemäß Fig.1 bis 8 am Anfang der Widerlagerzungen 7 angeordnet, das heißt, es befindet sich in axialer Richtung am bzw. vor dem Anfang dieser Widerlagerzungen 7 eine radiale Erweiterung, die in Sperrstellung gemäß Fig.2 und 6 diesen Anschlag 20 für den außen vorstehenden Anschlagbund 19 der Sperre 16 bildet. Es wäre aber natürlich auch möglich, an den Enden der Widerlagerzungen 7 innenseitig radial nach innen vorstehende Anschlagstücke anzuordnen, an denen beispielsweise auch die Stirnseite der Sperre 16 anschlagen könnte, um ihre axiale Verschiebung zu begrenzen.

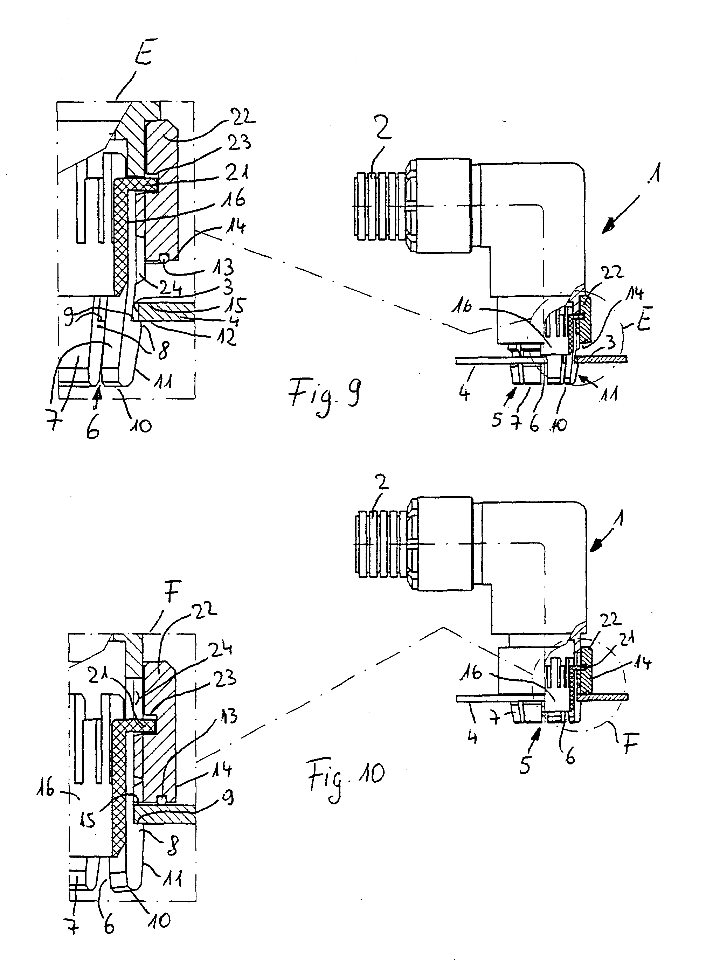

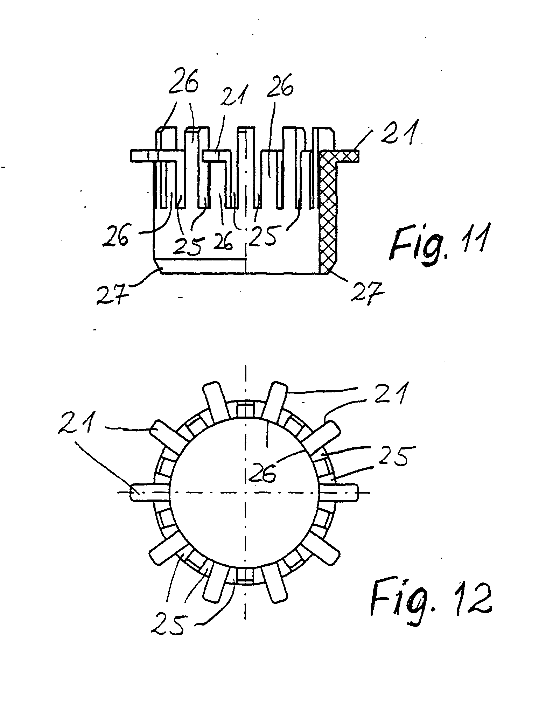

Auch im Ausführungsbeispiel gemäß den Figuren 9 bis 12 ist die Sperre 16 als Hülse ausgebildet. Im übrigen ist sie jedoch dadurch abgewandelt, daß sie an ihrem der Sperrstelle abgewandten Rand als "Vorsprung" gegenüber ihrer Außenseite radial nach außen vorstehende Betätigungsvorsprünge 21 hat, die die Außenabmessung der hülsenförmigen Sperre 16 nicht nur überragen, sondern in Gebrauchsstellung in die axial verlaufenden Schlitze 6 zwischen den Widerlagerzungen 7 eingreifen und durch diese nach außen vorstehen. Dies erkennt man besonders gut in der Einzelheit F in Fig. 10. Somit kann an diesen Betätigungsvorsprüngen 21 angegriffen werden, um die Sperre in axialer Richtung einerseits in Sperrstellung zu verschieben und andererseits aus dieser Sperrstellung wieder zurückzubewegen.

Dabei ist im Ausführungsbeispiel zum axialen Verstellen der Betätigungsvorsprünge 21 an der Außenseite der Anschlußarmatur 1 ein seinerseits axial verstellbarer und festlegbarer, die Betätigungsvorsprünge 21 beaufschlagender Ring 22 vorgesehen, in dessen Innerem eine Ringnut 23 in gleichbleibender Höhe umläuft und in welche die radial vorstehenden Betätigungs vorsprünge 21 gemäß Fig.9 und 10 und insbesondere gemäß den Einzelheiten E und F formschlüssig eingreifen. Vor allem beim Vergleich der Einzelheiten E und F wird deutlich, daß eine axiale Verstellung des Ringes 22 auf diese Weise die Betätigungsvorsprünge 21 mitnimmt, so daß auch die Sperre 16 axial verstellt wird.

In besonders zweckmäßiger Weise ist dabei dieser zum Verstellen der Sperre 16 dienende Ring 22 eine Mutter, deren Innengewinde mit einem an der Anschlußarmatur 1 außen vorgesehenen Verstellgewinde 24 zusammenpaßt und zusammenwirkt, welches Verstellgewinde 24 im Ausführungsbeispiel an den Außenseiten der Widerlagerzungen 7 sich über die zwischen diesen befindlichen Schlitze 6 jeweils fortsetzend angeordnet ist. Somit kann der als Mutter ausgebildete Ring 22 verdreht und dadurch gleichzeitig mit Hilfe des Verstellgewindes 24 axial verstellt werden, ohne daß sich die Sperre 16 mitdreht, jedoch unter gleichzeitiger axialer Verstellung dieser Sperre 16 und ihrer innerhalb der Schlitze 6 axial bewegbaren Betätigungsvorsprünge 21. Dabei enthält die der Wand 4 zugewandte Stirnseite des Ringes 22 die Dichtung 13 und bildet in Gebrauchsstellung, in welcher die Sperre 16 ihre Sperrstellung einnimmt, den Anschlag 14 an der Außenseite der Wand 4.

Obwohl denkbar wäre, nur mit einem einzigen Betätigungsvorsprung 21 oder vielleicht mit zwei sich an einem Durchmesser gegenüberliegend angeordneten Betätigungsvorsprüngen 21 auszukommen, ist gemäß Fig.12 vorgesehen, daß die hülsenförmige Sperre 16 an ihrem Umfang verteilt mehrere, jeweils durch Axialschlitze 25 voneinander getrennte Betätigungsvorsprünge 21 aufweist, die von durch die Schlitze 25 getrennten federnden Leisten 26 einstückig gehalten sind. Dabei erkennt man in Fig.11 und 12 gleichzeitig, daß die Sperre 16 an ihrem der Sperrstelle abgewandten Ende am Umfang verteilt mehr derartige Axialschlitze 25 als radial vorstehende Betätigungsvorsprünge 21, in diesem Falle doppelt so viele Axialschlitze 25 wie Betätigungsvorsprünge 21 aufweist, das heißt, nur jede zweite Leiste 26 trägt einen Betätigungsvorsprung 21, während die übrigen Leisten 26 in axialer Richtung noch etwas gegenüber diesen Betätigungsvorsprüngen 21 überstehen. Somit können diese ohne Betätigungsvorsprünge 21 ausgebildeten Leisten 26 innenseitig an den Widerlagerzungen 7 entlanggleiten und geführt sein.

Da die Sperre 16 durch die Betätigungsvorsprünge 21 in diesem Falle in beiden Verstellrichtungen zwangsgehalten und zwangsgeführt ist, bedarf es keines form- oder kraftschlüssigen Zusammenwirkens mit dem länglichen Körper 2, wie es in den Ausführungsbeispielen gemäß Fig.1 bis 4 und gemäß Fig.5 bis 8 vorgesehen ist. Somit kann die Anschlußarmatur 1 bei Verwendung einer Sperre 16 mit Betätigungsvorsprüngen 21 gemäß Fig.9 bis 12 schon fest montiert werden, wenn noch kein länglicher Körper 2 eingeführt ist oder dieser längliche Körper 2 - beispielsweise ein Wellschlauch gemäß den Figuren 9 und 10 - gar nicht bis in oder durch den Befestigungsbereich reichen soll. Dies kann vor allem bei einem Winkelstück gemäß Fig.9 und 10 oder einer T-förmigen Anschlußarmatur, aber auch bei einer Anschlußarmatur gemäß Fig.1 bis 8 zweckmäßig sein.

Die Anordnung der Betätigungsvorsprünge 21 an durch Schlitze voneinander getrennten federnden Leisten 26 erlaubt eine einfache Montage, weil die Leisten 26 mit den Betätigungsvorsprüngen 21 radial nach innen verformt werden können, wenn der Betätigungsring 22 mit ihnen gekuppelt wird, wobei sie selbsttätig wieder radial nach außen federn, wenn die Ringnut 23 auf der Höhe der Betätigungsvorsprünge 21 angelangt ist. Somit ergibt sich eine einfache Montierbarkeit.

Abschließend sei noch erwähnt, daß der im Sperrbereich befindliche stirnseitige Rand 27 der Sperre 16 in allen Ausführungsbeispielen an der Außenseite in dem Sinne angeschrägt ist, daß ein Konus gebildet ist, der das Einschieben zwischen die zum endgültigen Festlegen gegen eine Rückstellkraft radial nach außen verschwenkbaren elastischen Widerlagerzungen 7 erleichtert.

Die Anschlußarmatur 1 dient zum Befestigen von Schläuchen, Wellschläuchen, Rohren, Kabeln oder sonstigen länglichen Körpern 2 an oder auch in einer Öffnung oder Lochung 3 einer Wand 4, beispielsweise eines Gehäuses. Dabei hat die Anschlußarmatur 1 einen in dieser Öffnung 3 verankerbaren Befestigungsvorsprung 5, der außenseitig gegenüber einer Einschnürung radial vorstehende Haltevorsprünge 8 an durch Axialschlitze 7 gebildeten Widerlagerzungen 7 hat. Die Widerlagerzungen 7 und ihre Haltevorsprünge 8 sind dabei so gestaltet, daß sie nach dem Einschieben des Befestigungsvorsprunges 5 in die Öffnung 3 nur einen Teil ihrer Haltewirkung haben, also bei einer Belastung entgegen der Einsteckrichtung wieder aus der Öffnung 3 herausbewegbar sind. Für eine endgültige zug- und druckfeste Festlegung ist im Inneren der Anschlußarmatur 1 eine axial verschiebbare, etwa hülsenförmige Sperre 16 vorgesehen, die die federelastischen Widerlagerzungen 7 mit ihren Haltevorsprüngen 8 in Gebrauchsstellung gegen eine nach innen gerichtete radiale Verformung und Rückfederung sperrt und insbesondere zusätzlich noch nach außen verschwenkt, so daß die Rast- und Halteflächen 9 der Haltevorsprünge 8 den Rand 12 mehr als in der Vormontagestellung hintergreifen.

## Patentansprüche

1. Anschlußarmatur (1), auch winkel-, T-förmige Anschlußarmatur, zum Befestigen von länglichen Körpern (2), beispielsweise von Schläuchen, Wellschläuchen, Rohren, Kabeln oder dergleichen, an einer Öffnung (3) oder einem Durchbruch oder einer Lochung, zum Beispiel in einer Wand (4) eines Gehäuses oder dergleichen, wobei die Anschlußarmatur (1) wenigstens einen Befestigungsvorsprung (5) aufweist, der durch offene Schlitze (6) in Widerlagerzungen (7) aufgeteilt ist, an deren freien Enden radial nach außen vorstehende Haltevorsprünge (8) angeordnet sind, wobei diese Widerlagerzungen (7) beim Einschieben des Befestigungsvorsprunges (5) in die Öffnung (3), den Durchbruch oder dergleichen Lochung durch deren Lochungsrand (15) radial nach innen verformbar sind und hinter dem Rand (12) in die Halteposition gelangen, in welcher die Haltevorsprünge (8) diesen Rand (12) zumindest teilweise hintergreifen, und wobei mit Abstand zu den Haltevorsprüngen (8) wenigstens ein Anschlag (14) angeordnet ist, der in Gebrauchsstellung an dem dem hintergriffenen Rand (12) der Öffnung (3) oder dergleichen gegenüberliegenden Lochungsrand (15) anliegt, wobei die Anschlussarmatur (1) in ihrem Inneren eine ihr zugehörige axial verschiebbare Sperre (16) aufweist, die in Löseposition außerhalb des Bereiches der Widerlagerzungen (7) oder Haltevorsprünge (8) und in Gebrauchsstellung zwischen diese eingreifend angeordnet ist und die Haltevorsprünge (8) in dieser Gebrauchsstellung gegen eine radiale Verformung nach Innen sperrt, wobei die Widerlagerzungen (7) und die demgegenüber radial vorstehenden Halte- oder Rastvorsprünge (8) so geformt und/oder bemessen sind, daß sie nach dem Einschieben in die Öffnung (3) oder dergleichen lösbar an dem Rand (12) einrasten und unter entgegen der Einsteckrichtung wirkender Belastung oder unter Zug- und/oder Schwenkbelastung wieder aus der Öffnung (3) herausbewegbar oder zurückziehbar sind, **dadurch gekennzeichnet, daß** die Widerlagerzungen (7) an ihrem in Gebrauchsstellung innerhalb des Durchbruches (3) oder der Lochung befindlichen Bereich eine geringere Außenabmessung, nämlich einen kleineren Außenumfang oder Durchmesser als der Durchbruch (3) oder die Lochung haben und mittels der in axialer Richtung zwischen sie verschiebbaren Sperre (16) aufweitbar oder aufspreizbar sind.

2. Anschlußarmatur nach Anspruch 1, **dadurch gekennzeichnet, daß** die Rastflächen (9) der Haltevorsprünge (8) gegenüber einer radial zu der Anschlußarmatur (1) verlaufenden Ebene abgeschrägt sind, wobei die Schrägung von innen nach außen von den Rändern (12) des Durchbruches (3) weg verläuft, so daß ein von der Innenseite der Lochung (3) weg gerichteter, sich erweiternder Konus besteht.

3. Anschlußarmatur nach Anspruch 2, **dadurch gekennzeichnet, daß** die in Gebrauchsstellung dem Rand des Durchbruches zugewandten Schrägflächen der Haltevorsprünge konkav oder ballig konvex und/oder bereichsweise geradlinig verlaufen.

4. Anschlußarmatur nach einem der Ansprüche 1 bis 3, **dadurch gekennzeichnet, dass** der in Gebrauchsstellung innerhalb des Durchbruchs (3) oder Lochung befindliche Bereich geringerer Außenabmessung der Widerlagerzungen (7) durch die Sperre (16) an die Innenseite der Öffnung (3) andrückbar ist.

5. Anschlußarmatur nach Anspruch 1, **dadurch gekennzeichnet, daß** die Rast- oder Halteflächen (9) der Haltevorsprünge (8) der Widerlagerzungen (7) bei nicht gespreizten Widerlagerzungen (7) den Umfang der Öffnung (3), Durchbruches oder der Lochung nur um einen Teil ihrer Abmessung derart überragen, daß die Armatur (1) bei außerhalb der Widerlagerzungen (7) befindlicher Sperre (16) an der Öffnung (3) zurückbewegbar gehalten ist.

6. Anschlußarmatur nach einem der Ansprüche 1 bis 5, **dadurch gekennzeichnet, daß** die axial verschiebbare, insbesondere hülsenförmige Sperre (16) wenigstens einen radial nach innen und/oder außen vorstehenden Vorsprung hat, der insbesondere durch das Einschieben des länglichen Körpers (2) in das Innere der Armatur (1) beaufschlagbar ist.

7. Anschlußarmatur nach Anspruch 6, **dadurch gekennzeichnet, daß** der nach innen vostehende Vorsprung in der Sperre (16) gegen eine Rückstellkraft verformbar oder umbiegbar ist.

8. Anschlußarmatur nach Anspruch 6 oder 7, **dadurch gekennzeichnet, daß** im Inneren der Sperre (16) als Vorsprung wenigstens eine radial nach innen vorstehende, insbesondere am gesamten Innenumfang der Sperre (16) angeordnete, in axialer Richtung umbiegbare Lippe (17) vorgesehen ist.

9. Anschlußarmatur nach einem der Ansprüche 6 bis 8, **dadurch gekennzeichnet, daß** der im Inneren der Sperre (16) radial vorstehende Vorsprung, insbesondere die Lippe (17) am Innenumfang der Sperre (16) ununterbrochen umlaufend angeordnet ist.

10. Anschlußarmatur nach einem der Ansprüche 1 bis 9, **dadurch gekennzeichnet, daß** innerhalb der Anschlußarmatur (1) ein Anschlag (21) für die Sperre (16) vorgesehen ist.

11. Anschlußarmatur nach Anspruch 10, **dadurch gekennzeichnet, daß** der innenliegende Anschlag (21) für die Sperre (16) am Anfang der Widerlagerzungen (7) angeordnet und insbesondere als Durchmesservergrößerung gestaltet ist.

12. Anschlußarmatur nach einem der Ansprüche 1 bis 11, **dadurch gekennzeichnet, daß** die Sperre (16) als Hülse ausgebildet ist, die - insbesondere an ihrem der Sperrstelle abgewandten Rand - wenigstens einen gegenüber ihrer Außenseite radial nach außen vorstehenden Betätigungsvorsprung (21) hat, der die Außenabmessung der hülsenförmigen Sperre (16) überragt und in einen axial verlaufenden Schlitz (6) zwischen Widerlagerzungen (7) eingreift und durch diesen nach außen vorsteht.

13. Anschlußarmatur nach Anspruch 12, **dadurch gekennzeichnet, daß** zum axialen Verstellen des oder der Betätigungsvorsprünge (21) an der Außenseite der Anschlußarmatur (1) ein axial verstellbarer und festlegbarer, den/die Betätigungsvorsprünge (21) beaufschlagender Ring (22) vorgesehen ist.

14. Anschlußarmatur nach Anspruch 13, **dadurch gekennzeichnet, daß** im Inneren des Ringes (22) wenigstens eine Ringnut (23) angeordnet ist, in die der/die radial vorstehenden Betätigungsvorsprünge (21) formschlüssig eingreifen.

15. Anschlußarmatur nach einem der Ansprüche 1 bis 14, **dadurch gekennzeichnet, daß** die hülsenförmige Sperre (16) an ihrem Umfang verteilt mehrere, jeweils durch Axialschlitze (25) voneinander getrennte Betätigungsvorsprünge (21) aufweist, die von durch die Axialschlitze (25) getrennten federnden Leisten (26) einstückig gehalten sind.

16. Anschlußarmatur nach Anspruch 15, **dadurch gekennzeichnet, daß** die Sperre (16) an ihrem der Sperrstelle abgewandten Ende am Umfang verteilt mehr Axialschlitze (25) als radial vorstehende Betätigungsvorsprünge (21), insbesondere doppelt so viele Axialschlitze (25) wie Betätigungsvorsprünge (21) aufweist.

17. Anschlußarmatur nach einem der Ansprüche 13 bis 16, **dadurch gekennzeichnet, daß** der zum Verstellen der Sperre (16) dienende Ring (22) eine Mutter ist, deren Innengewinde mit einem an der Anschlußarmatur (1),außen vorgesehenen Verstellgewinde (24) zusammenpaßt, welches Verstellgewinde (24), insbesondere an den Außenseiten der Widerlagerzungen (7) sich über die zwischen diesen befindlichen Schlitz (6) jeweils fortsetzend angeordnet ist.

18. Anschlußarmatur nach einem der vorstehenden Ansprüche, **dadurch gekennzeichnet, daß** der im Sperrbereich befindliche stirnseitige Rand (27) der Sperre (16) an der Außenseite angeschrägt und/oder abgerundet ist.

## Claims

1. Connection fitting (1) also an angular, T-shaped connection fitting, for attaching elongate bodies (2), for example hoses, corrugated hoses, pipes, cables or the like, to an opening (3) or an aperture or a perforation, for example in a wall (4) of a housing or the like, the connection fitting (1) including at least one attachment projection (5), which is divided by open slots (6) into abutment tongues (7), at the free ends of which there are disposed retaining projection members (8), which protrude radially outwardly, these abutment tongues (7) being deformable radially inwardly as the attachment projection (5) is being inserted into the opening (3), the aperture or similar perforation by the perforated edge (15) thereof, and said tongues passing behind the edge (12) into the retaining position, in which the retaining projection members (8) engage at least partially behind this edge (12), and at least one stop member (14) being disposed at a spacing from the retaining projection members (8), said stop member abutting, in the position of use, against the perforated edge (15), which is situated opposite the engaged edge (12) of the opening (3) or the like, the connection fitting (1 including in its interior a locking means (16), which is associated with said fitting and is axially displaceable, said locking means being disposed, in the release position, externally of the region of the abutment tongues (7) or retaining projection members (8) and, in the position of use, so as to engage between said projection members, and said locking means locks the retaining projection members (8) in this position of use to prevent radial deformation inwardly, the abutment tongues (7) and the retaining or locking projection members (8), which protrude radially relative to said tongues, being so shaped and/or dimensioned that they lock in position on the edge (12) in a detachable manner, after being inserted into the opening (3) or the like, and can be displaced again or withdrawn from the opening (3) by loading, which acts in opposition to the direction of insertion or by tractive and/or pivotal loading, **characterised in that**, at their region situated internally of the aperture (3) or the perforation in the position of use, the abutment tongues (7) have a smaller external dimension, that is to say a smaller external circumference or diameter, than the aperture (3) or the perforation and can be widened or splayed-open by means of the locking means (16), which is displaceable between said tongues when viewed with respect to the axial direction.

2. Connection fitting according to claim 1, **characterised in that** the locking surfaces (9) of the retaining projection members (8) are chamfered relative to a plane running radially relative to the connection fitting (1), the inclination extending from inside to outside away from the edges (12) of the aperture (3), so that there is a widening cone orientated away from the inside of the perforation (3).

3. Connection fitting according to claim 2, **characterised in that** the inclined faces of the retaining projection members, facing the edge of the aperture in the position of use, extend concavely or spherically convexly and/or rectilinearly in various regions.

4. Connection fitting according to one of claims 1 to 3, **characterised in that** the region where the abutment tongues (7) have a smaller external dimension, situated internally of the aperture (3) or perforation in the position of use, can be pressed against the inside of the opening (3) by the locking means (16).

5. Connection fitting according to claim 1, **characterised in that** the locking or retaining faces (9) of the retaining projection members (8) of the abutment tongues (7) protrude beyond the circumference of the opening (3), aperture or perforation by only a portion of their dimension, when the abutment tongues (7) are not spread apart, in such a manner that the fitting (1) is retained on the opening (3) in a rearwardly displaceable manner when the locking means (16) is situated externally of the abutment tongues (7).

6. Connection fitting according to one of claims 1 to 5, **characterised in that** the axially displaceable locking means (16), which is more especially sleeve-like, has at least one projection member, which protrudes radially inwardly and/or outwardly and can be acted-upon more especially by the elongate body (2) being inserted into the interior of the fitting (1).

7. Connection fitting according to claim 6, **characterised in that** the inwardly protruding projection member in the locking means (16) is deformable or bendable in opposition to a restoring force.

8. Connection fitting according to claim 6 or 7, **characterised in that** at least one radially inwardly protruding lip (17) is provided in the interior of the locking means (16) as the projection member, said lip being more especially disposed over the entire internal circumference of the locking means (16) and being bendable in the axial direction.

9. Connection fitting according to one of claims 6 to 8, **characterised in that** the projection member which protrudes radially in the interior of the locking means (16), more especially the lip (17), is disposed on the internal circumference of the locking means (16) so as to extend in a continuous manner.

10. Connection fitting according to one of claims 1 to 9, **characterised in that** a stop member (21) for the locking means (16) is provided internally of the connection fitting (1).

11. Connection fitting according to claim 10, **characterised in that** the internally situated stop member (21) for the locking means (16) is disposed at the beginning of the abutment tongues (7) and is, more especially, in the form of a diameter enlargement.

12. Connection fitting according to one of claims 1 to if, **characterised in that** the locking means (16) is in the form of a sleeve which - more especially at its edge remote from the locking point - has at least one actuating projection member (21), which protrudes radially outwardly opposite its external side, said actuating projection member protruding beyond the external dimension of the sleeve-like locking means (16) and engaging in an axially extending slot (6) between abutment tongues (7), and said projection. member protruding outwardly through said slot.

13. Connection fitting according to claim 12, **characterised in that** an axially adjustable and securable ring (22), which acts on the actuating projection member/members (21), is provided for the axial adjustment of the actuating projection member or members (21) on the outside of the connection fitting (1).

14. Connection fitting according to claim 13, **characterised in that** there is disposed in the interior of the ring (22) at least one annular groove (23), in which the radially protruding actuating projection member/members (21) engages/engage in an interlocking manner.

15. Connection fitting according to one of claims 1 to 14, **characterised in that** the sleeve-like locking means (16) has a plurality of actuating projection members (21), which are distributed over the circumference of said locking means and are separated from one another by respective axial slots (25), said projection members being retained in one piece by resilient bars (26) separated by the axial slots (25).

16. Connection fitting according to claim 15, **characterised in that** the locking means (16) has more axial slots (25) distributed over the circumference than radially protruding actuating projection members (21) at its end remote from the locking point, more especially twice as many axial slots (25) as actuating projection members (21).

17. Connection fitting according to one of claims 13 to 16, **characterised in that** the ring (22), which serves to adjust the locking means (16), is a nut with an internal thread which matches an adjustment thread (24) provided externally on the connection fitting (1), said adjustment thread (24) being disposed more especially on the outsides of the abutment tongues (7) so as to continue beyond the slots (6) situated between said tongues.

18. Connection fitting according to one of the preceding claims, **characterised in that** the edge (27) at the end face of the locking means (16), situated in the locking region, is inclined and/or rounded at the outside.

## Revendications

1. Dispositif de raccordement (1), également dispositif de raccordement angulaire, en forme de T, pour la fixation de corps (2) allongés, par exemple de flexibles, de flexibles ondulés, de tuyaux, de câbles ou similaires, sur une ouverture (3) ou un passage ou une perforation, par exemple dans une paroi (4) d'un boîtier ou similaire, le dispositif de raccordement (1) présentant au moins une saillie de fixation (5), qui est divisée par des fentes (6) ouvertes pour former des lames de butée (7) sur les extrémités libres desquelles sont disposées des saillies de maintien (8) dépassant dans le sens radial vers l'extérieur, moyennant quoi ces lames de butée (7) peuvent être déformées dans le sens radial vers l'intérieur lors de l'introduction de la saillie de fixation (5) dans l'ouverture (3), le passage ou la perforation similaire à travers leur bord de perforation (15) et arrive derrière le bord (12) dans la position de maintien, dans laquelle les saillies de maintien (8) saisissent ce bord (12) au moins en partie par l'arrière, et au moins une butée (14) étant disposée à distance des saillies de maintien (8) qui s'appuie dans la position d'utilisation sur le bord de perforation (15) faisant face au bord (12), saisi par l'arrière, de l'ouverture (3) ou similaire, le dispositif de raccordement (1) présentant dans son espace intérieur un dispositif de blocage (16) coulissant axialement et lui appartenant, qui est disposé dans la position de desserrage en dehors de la zone des Lames de butée (7) ou saillies de maintien (8) et dans la position d'utilisation en s'engageant entre celles-ci, et bloque les saillies de retenue (8) dans cette position d'utilisation contre une déformation radiale vers l'intérieur, les lames de butée (7) et les saillies de retenue et de crantage (8), qui débordent en face dans le sens radial, étant formées et/ou dimensionnées de telle sorte qu'elles peuvent s'encliqueter de façon amovible sur le bord (12) après l'emboîtement dans l'ouverture (3) ou similaire et peuvent être sorties ou retirées à nouveau de l'ouverture (3) sous la charge agissant dans le sens contraire au sens d'emboîtement ou sous l'effet d'une charge de traction et/ou de pivotement, **caractérisée en ce que** les lames de butée (7) ont sur leur zone se trouvant dans la position d'utilisation à l'intérieur de l'ouverture (3) ou de la perforation une dimension extérieure inférieure, c'est à dire un pourtour extérieur ou diamètre inférieur au passage (3) ou à la perforation et peuvent être séparées ou écartées au moyen du dispositif de blocage (16) pouvant être déplacé dans le sens axial entre elles.

2. Dispositif de raccordement selon la revendication 1, **caractérisé en ce que** les surfaces d'encliquetage (9) des saillies de retenue (8) sont inclinées par rapport à un plan s'étendant radialement par rapport au dispositif de raccordement (1), l'inclinaison se faisant de l'intérieur vers l'extérieur en partant des bords (12) du passage (3), de sorte qu'il en résulte un cône partant du côté intérieur de la perforation (3) et s'élargit.

3. Dispositif de raccordement selon la revendication 2, **caractérisé en ce que** les surfaces inclinées des saillies de retenue, tournées dans la position d'utilisation vers le bord du passage, ont une forme concave ou bombée convexe et/ou sont droites par endroits.

4. Dispositif de raccordement selon l'une quelconque des revendications 1 à 3, **caractérisé en ce que** la zone se trouvant dans la position d'utilisation à l'intérieur du passage (3) ou perforation, de dimension extérieure plus faible, des lames de butée (7) peut être appuyée par le dispositif de blocage (16) contre le coté intérieur de l'ouverture (3).

5. Dispositif de raccordement selon la revendication 1, **caractérisé en ce que** les surfaces d'encliquetage ou de retenue (9) des saillies de retenue (8) des lames de butée (7) ne débordent du pourtour de l'ouverture (3), passage ou perforation que d'une partie de sa dimension, avec des lames de butée (7) non écartées, de telle sorte que le dispositif (1) soit maintenu de façon à pouvoir être reculé au niveau de l'ouverture (3) avec un dispositif de blocage (16) se trouvant à l'extérieur des lames de butée (7).

6. Dispositif de raccordement selon l'une quelconque des revendications 1 à 5, **caractérisé en ce que** le dispositif de blocage (16) coulissable dans le sens axial, en particulier en forme de douille, présente au moins une partie saillante, débordant dans le sens radial vers l'intérieur et/ou l'extérieur, qui peut être sollicitée en particulier par l'insertion du corps allongé (2) à l'intérieur du dispositif (1).

7. Dispositif de raccordement selon la revendication 6, **caractérisé en ce que** la saillie dépassant à l'intérieur peut être déformée ou pliée dans le dispositif de blocage (16) contre une force de rappel.

8. Dispositif de raccordement selon la revendication 6 ou 7, **caractérisé en ce qu'**à l'intérieur du dispositif de blocage (16), en tant que saillie, il est prévu au moins une lèvre (17) débordant vers l'intérieur au plan radial, disposé en particulier sur l'ensemble du pourtour intérieur du dispositif de blocage (16) et pouvant être pliée dans le sens axial.

9. Dispositif de raccordement selon l'une quelconque des revendications 6 à 8, **caractérisé en ce que** la saillie débordant dans le sens radial à l'intérieur du dispositif de blocage (16), en particulier la lèvre (17), est disposée de façon ininterrompue et périphérique sur le pourtour intérieur du dispositif de blocage (16).

10. Dispositif de raccordement selon l'une quelconque des revendications 1 à 9, **caractérisé en ce qu'**une butée (21) pour le dispositif de blocage (16) est prévue à l'intérieur du dispositif de raccordement (1).

11. Dispositif de raccordement selon la revendication 10, **caractérisé en ce que** la butée (21) intérieure pour le dispositif de blocage (16) est disposée au début des lames de butée (7) et est conçue en particulier comme un agrandissement de diamètre.

12. Dispositif de raccordement selon l'une quelconque des revendications 1 à 11, **caractérisé en ce que** le dispositif de blocage (16) est conçu comme une douille, qui a au moins une saillie d'actionnement (21) débordant par rapport à son côté extérieur dans le sens radial vers l'extérieur, en particulier sur son bord opposé au point de blocage, qui déborde de la dimension extérieure du dispositif de blocage (16) en forme de douille, s'engage dans une fente (6) s'étendant axialement entre des lames de butée (7) et déborde à travers cette fente vers l'extérieur.

13. Dispositif de raccordement selon la revendication 12, **caractérisé en ce qu'**il est prévu une bague (22) pouvant coulisser et être fixée dans le sens axial et sollicite le/les saillies d'actionnement (21) pour le déplacement axial de la ou des saillies (21) sur le côté extérieur du dispositif de raccordement (1).

14. Dispositif de raccordement selon la revendication 13, **caractérisé en ce qu'**à l'intérieur de la bague (22) est disposée au moins une rainure annulaire (23), dans laquelle la/les saillie(s) d'actionnement (21) débordant sur un plan radial s'engage(nt) par conjugaison de forme.

15. Dispositif de raccordement selon l'une quelconque des revendications 1 à 14, **caractérisé en ce que** le dispositif de blocage (16) en forme de douille présente, réparties sur son pourtour, plusieurs saillies d'actionnement (21) respectivement séparées par des fentes axiales (25), qui sont maintenues d'un seul tenant par des baguettes (26) élastiques séparées par les fentes axiales (25).

16. Dispositif de raccordement selon la revendication 15, **caractérisé en ce que** le dispositif de blocage (16) présente, réparties sur le pourtour sur son extrémité opposée au point de blocage, davantage de fentes axiales (25) que de saillies d'actionnement (21) débordant dans le sens radial, en particulier, deux fois plus de fentes axiales (25) que de saillies d'actionnement (21).

17. Dispositif de raccordement selon l'une quelconque des revendications 13 à 16, **caractérisé en ce que** la bague (22) servant au déplacement du dispositif de blocage (16) est un écrou, dont le filetage intérieur s'adapte à un filetage de réglage (24) prévu à l'extérieur sur le dispositif de raccordement (1), lequel filetage de réglage (24) est disposé en particulier sur les côtés extérieurs des lames de butée (7) en se prolongeant respectivement sur les fentes (6) se trouvant entre ces lames.

18. Dispositif de raccordement selon l'une quelconque des revendications précédentes, **caractérisé en ce que** le bord (27) avant, se trouvant dans la zone de blocage, du dispositif de blocage (16) est chanfreiné et/ou arrondi sur le côté extérieur.
